# EUROPEAN PATENT APPLICATION

(11) **EP 2 924 080 A1**
(43) Date of publication of application: **30.09.2015**
(21) Application number: 13856149.3
(22) Date of filing: 20.11.2013
(51) Int. Cl.: C09D 11/00, B41J 2/01, B41M 5/00

(54) **INK COMPOSITION FOR PHOTOCURABLE INKJET PRINTING AND PRINTED MATTER**

(30) Priority: 20.11.2012 JP 2012254685
(71) Applicant: Sakata INX Corp., Osaka-shi, Osaka 550-0002 (JP)
(72) Inventor: MIZUTANI Shinya, Osaka-shi Osaka 550-0002 (JP); HIROSE Tadashi, Osaka-shi Osaka 550-0002 (JP); MYOSE Takuya, Osaka-shi Osaka 550-0002 (JP)
(74) Representative: Hart-Davis, Jason
(86) International application number: PCT/JP2013/081280
(87) International publication number: WO 2014/080942

(57) **Abstract**

The present invention provides a photocurable ink composition for inkjet printing having favorable ejection stability from a low viscosity compatible inkjet head at ambient temperature. The present invention relates to a photocurable ink composition for inkjet printing containing at least a photopolymerizable compound, a photopolymerization initiator, a surfactant, and a pigment, the photocurable ink composition for inkjet printing having a viscosity at 25°C of 12 mPa·s or less, the photocurable ink composition for inkjet printing containing, as the surfactant, 0.01 to 0.30% by mass of polyester-modified methylalkylpolysiloxane.

## Description

### TECHNICAL FIELD

The present invention relates to a photocurable ink composition for inkjet printing and a printed material. More specifically, the present invention relates to a photocurable ink composition for inkjet printing having favorable ejection stability from an inkjet head compatible with energy saving and high speed/high definition printing at ambient temperature, and a printed material prepared using the photocurable ink composition for inkjet printing.

### BACKGROUND ART

Recently, efforts for saving energy have been made in the field of ink-jet printers, and an inkjet head driven with smaller energy has been developed. Moreover, development is being made in a method for enabling highspeed printing by increasing the driving frequency of the inkjet head, and in an inkjet head ejecting a large number of fine droplets for providing a high-definition recorded image without granular feeling.

For achieving such development, a low-viscosity ink composition is needed. In the inkjet recording method, an ink composition is filled into a nozzle and ejected therefrom by an internal pressure of a head. Accordingly, the time required for filling a nozzle with an ink composition and the magnitude of the internal pressure needed for ejection are directly related to the printing speed and the driving energy, respectively.

Here, the time required for filling a nozzle and the magnitude of the internal pressure needed for ejection are largely dependent upon the viscosity of an ink composition. In other words, if the viscosity of an ink composition is low, the filling time can be shortened and the internal pressure may be low. Moreover, in the case of a fine nozzle, since filling takes a longer time, it is important that the viscosity of the ink composition is low.

The viscosities of conventional photocurable ink compositions for inkjet printing are comparatively high and fail to contribute to the above development.

A method of warming/heating an ink composition can lower the viscosity while maintaining the ink properties. The method, however, needs additional energy for warming/heating and may damage an inkjet head.

For achieving the ejection stability of a photocurable ink composition for inkjet printing, a surfactant is commonly added.

Examples of the surfactant added to a photocurable ink composition for inkjet printing include polyether-modified silicone oil having an HLB of 5 to 12 disclosed in Patent Literature 1 and polyester-modified polydimethyl siloxane disclosed in Patent Literature 2.

If any of the surfactants disclosed in these Patent Literatures is added to a low-viscosity ink composition, the surface tension of the low-viscosity ink composition is lowered to increase the wettability to a water repellent film provided on a surface on the ejection opening side of an inkjet head. In such a case, the low-viscosity ink composition, when ejected from the inkjet head, spreads over the ejection opening portion, resulting in lowered ejection stability.

### CITATION LIST

### - Patent Literature

Patent Literature 1: JP-A 2012-167161
Patent Literature 2: Japanese Patent No. 4967378

### SUMMARY OF INVENTION

### - Technical Problem

The present invention aims to provide a photocurable ink composition for inkjet printing having favorable ejection stability from an inkjet head compatible with energy saving and high speed/high definition printing at ambient temperature, and a printed material prepared using the photocurable ink composition for inkjet printing.

### - Solution to problem

The present invention relates to a photocurable ink composition for inkjet printing containing at least a photopolymerizable compound, a photopolymerization initiator, a surfactant, and a pigment, the photocurable ink composition for inkjet printing having a viscosity at 25°C of 12 mPa·s or less, the photocurable ink composition for inkjet printing containing, as the surfactant, 0.01 to 0.30% by mass of polyester-modified methylalkylpolysiloxane.

The photocurable ink composition for inkjet printing of the present invention preferably contains 4 to 70% by mass of vinyloxyethoxy ethyl acrylate as the photopolymerizable compound.

The photocurable ink composition for inkjet printing of the present invention preferably contains 10 to 65% by mass of benzyl acrylate as the photopolymerizable compound and an acylphosphine oxide photopolymerization initiator as the photopolymerization initiator.

The photocurable ink composition for inkjet printing of the present invention preferably has a flash point of 70°C or higher and a viscosity at 25°C of 5 mPa·s or less, the flash point being measured with a SETA closed-cup flash point tester in conformity with JIS K2265.

The present invention also relates to a printed material obtainable by photocuring a coating film of the photocurable ink composition for inkjet printing of the present invention printed on a polyvinyl chloride sheet.

The present invention is specifically described in the following.

The present inventors intensively studied about a photocurable ink composition for inkjet printing containing a photopolymerizable compound, a photopolymerization initiator, a surfactant, and a pigment to find out the following. The use of a particular material, specifically, polyester-modified methylalkylpolysiloxane, as a surfactant in a specific amount controls the wettability of an ink composition to an inkjet head even if the photocurable ink composition has low viscosity, and solves all the problems mentioned above. The present invention was thus accomplished.

The photocurable ink composition for inkjet printing of the present invention (hereafter, also referred to as the ink composition of the present invention) contains at least a photopolymerizable compound, a photopolymerization initiator, a surfactant, and a pigment.

The ink composition of the present invention contains polyester-modified methylalkylpolysiloxane as the surfactant.

The polyester-modified methylalkylpolysiloxane contained as the surfactant prevents the surface tension of the ink composition of the present invention from being excessively lowered, leading to better wettability to a water repellent film provided on an ejection surface of an inkjet head. As a result, the ink composition of the present invention has excellent ejection stability from an inkjet head.

The ink composition of the present invention has a surface tension of preferably 29 to 32 N/m. The surface tension within the above range lowers the wettability to a water repellent film of a presently marketed inkjet head compatible with a low-viscosity ink, preventing the ink composition of the present invention from being spread at an ejection opening of the inkjet head.

The surface tension is measured at a temperature of 25°C with a dynamic wettability tester (product name: WET-6000) produced by Rhesca Corporation.

The ink composition of the present invention contains the polyester-modified methylalkylpolysiloxane in an amount of 0.01 to 0.30% by mass. If the amount is less than 0.01% by mass, the surface tension of the ink composition of the present invention increases to lower the ejection stability from an inkjet head. If the amount is more than 0.30% by mass, the ink composition contains more bubbles to lower the ejection stability.

The amount of the polyester-modified methylalkylpolysiloxane is preferably 0.02% by mass at the minimum and 0.25% by mass at the maximum.

In the ink composition of the present invention, the photopolymerizable compound preferably contains vinyloxyethoxy ethyl acrylate. The ink composition containing vinyloxyethoxy ethyl acrylate as the photopolymerizable compound has excellent curability with light emitting diode (LED) light and favorably adheres to a polyvinyl chloride sheet such as tarpaulin or vinyl chloride resin sheets, and favorably inhibits cockling.

In addition, the ink composition can maintain a high flash point and low skin irritation as well as low viscosity as described later. Moreover, the ink composition has favorable ejection stability from an inkjet head compatible with energy saving and high speed/high definition printing at ambient temperature.

The amount of the vinyloxyethoxy ethyl acrylate is preferably 4 to 70% by mass relative to the total amount of the ink composition of the present invention. If the amount is less than 4% by mass, a printed material prepared using the ink composition of the present invention may have lower solvent resistance to, for example, isopropyl alcohol (IPA). If the amount is more than 70% by mass, the adhesion of the ink composition to a polyvinyl chloride resin sheet or the like may be lowered. The amount of the vinyloxyethoxy ethyl acrylate is more preferably 15 to 40% by mass.

The ink composition of the present invention preferably further contains benzyl acrylate as the photopolymerizable compound. The ink composition containing the benzyl acrylate has excellent curability with light emitting diode (LED) light and favorable adhesion to a polyvinyl chloride sheet such as tarpaulin or vinyl chloride resin sheets, and favorably inhibits cockling.

In addition, the ink composition can maintain a high flash point and low skin irritation as well as low viscosity as described later. Moreover, the ink composition has favorable ejection stability from an inkjet head compatible with energy saving and high speed/high definition printing at ambient temperature.

The amount of the benzyl acrylate is preferably 10 to 65% by mass relative to the total amount of the ink composition of the present invention. If the amount is less than 10% by mass, the adhesion of the ink composition to a polyvinyl chloride resin sheet may be lowered. If the amount is more than 65% by mass, the solvent resistance to, for example, isopropyl alcohol (IPA) may be lowered. The amount of the benzyl acrylate is more preferably 20 to 55% by mass.

The ink composition of the present invention may also contain a monofunctional monomer having a viscosity at 25°C of 5 mPa·s or less as the photopolymerizable compound as long as the flash point is not lowered.

Examples of the monofunctional monomer having a viscosity at 25°C of 5 mPa·s or less include 2-methoxyethyl acrylate, isobutyl acrylate, isooctyl acrylate, isodecyl acrylate, and octyl/decyl acrylate. One or, if needed, two or more of these monofunctional monomers having a viscosity of 5 mPa·s or less may be used.

The ink composition of the present invention preferably contains N-vinyl caprolactam as the photopolymerizable compound. The N-vinyl caprolactam is used as an essential component when the ink composition of the present invention contains a pigment, which will be described later, other than a white pigment, and may be used as an optional component when the ink composition of the present invention contains a white pigment.

When a pigment other than a white pigment is used, the amount of the N-vinyl caprolactam is preferably 5 to 35% by mass. If the amount is less than 5% by mass, the adhesion of the ink composition to a polyvinyl chloride sheet is lowered. If the amount is more than 35% by mass, the curability is lowered. The amount of the N-vinyl caprolactam is more preferably 10% by mass at the minimum and 30% by mass at the maximum. When a white pigment is used, the amount of the N-vinyl caprolactam is preferably 0 to 35% by mass in the ink composition of the present invention.

The ink composition of the present invention preferably further contains isobornyl acrylate as a photopolymerizable compound. The ink composition containing the isobornyl acrylate can have better dispersion stability of a pigment described later.

The amount of the isobornyl acrylate is preferably 5 to 30% by mass in the ink composition of the present invention. If the amount of the isobornyl acrylate is less than 5% by mass, tackiness may not be sufficiently suppressed. If the amount is more than 30% by mass, the adhesion of the ink composition to a polyvinyl chloride sheet may be lowered. The amount of the isobornyl acrylate is more preferably 10% by mass at the minimum and 20% by mass at the maximum.

As a photopolymerizable compound contained in the ink composition of the present invention, another photopolymerizable compound in addition to the photopolymerizable compound described above may be used in such an amount that the properties of the ink composition of the present invention, especially the flash point, are not affected, that the viscosity at 25°C is not increased to exceed 12 mPa·s, and that the adhesion of the ink composition to a polyvinyl chloride sheet is not lowered. Examples of the other photopolymerizable compound nonlimitatively include monofunctional monomers, polyfunctional monomers, prepolymers, and oligomers of ethylenic double bond-containing compounds.

Specific examples of the other photopolymerizable compound include ethylene glycol di(meth)acrylate, diethylene glycol di(meth)acrylate, polyethylene glycol di(meth)acrylate, 1,6-hexanediol di(meth)acrylate, ethoxylated 1,6-hexanediol di(meth)acrylate, neopentyl glycol di(meth)acrylate, ethoxylated neopentyl glycol di(meth)acrylate, propoxylated neopentyl glycol di(meth)acrylate, tripropylene glycol di(meth)acrylate, polypropylene glycol di(meth)acrylate, 1,4-butanediol di(meth)acrylate, 1,9-nonanediol di(meth)acrylate, tetraethylene glycol di(meth)acrylate, 2-n-butyl-2-ethyl-1,3-propanediol di(meth)acrylate, dimethylol tricyclodecane di(meth)lacrylate, hydroxypivalic acid neopentyl glycol di(meth)acrylate, 1,3-butylene glycol di(meth)acrylate, ethoxylated bisphenol A di(meth)acrylate, propoxylated bisphenol A di(meth)acrylate, cyclohexane dimethanol di(meth)acrylate, dimethylol dicyclopentane di(meth)acrylate, trimethyrolpropane tri(meth)acrylate, ethoxylated trimethyrolpropane tri(meth)acrylate, propoxylated trimethyrolpropane tri(meth)acrylate, pentaerythritol tri(meth)acrylate, tetramethylolpropane tri(meth)acrylate, tetramethylolmethane tri(meth)acrylate, pentaerythritol tetra(meth)acrylate, ethylene oxide-modified pentaerythritol tetra(meth)acrylate, caprolactone-modified trimethyrolpropane tri(meth)acrylate, ethoxylated isocyanuric acid tri(meth)acrylate, tri(2-hydroxy ethyl isocyanurate) tri(meth)acrylate, propoxylate glyceryl tri(meth)acrylate, tetramethylolmethane tetra(meth)acrylate, ditrimethylolpropane tetra(meth)acrylate, ethoxylated pentaerythritol tetra(meth)acrylate, dipentaerythritol hexa(meth)acrylate, neopentyl glycol oligo(meth)acrylate, 1,4-butanediol oligo(meth)acrylate, 1,6-hexanediol oligo(meth)acrylate, trimethylolpropane oligo(meth)acrylate, pentaerythritol oligo(meth)acrylate, urethane (meth)acrylate, epoxy (meth)acrylate, polyester (meth)acrylate, 2-phenoxyethyl (meth)acrylate, (meth)acryloyl morpholine, 2-hydroxyethyl (meth)acrylate, 2-hydroxypropyl (meth)acrylate, 4-hydroxybutyl (meth)acrylate, isobutyl (meth)acrylate, t-butyl (meth)acrylate, isooctyl (meth)acrylate, cyclohexyl (meth)acrylate, methoxy-triethylene glycol (meth)acrylate, 3-methoxybutyl (meth)acrylate, ethoxyethoxyethyl (meth)acrylate, butoxyethyl (meth)acrylate, ethoxy diethylene glycol (meth)acrylate, methoxydipropylene glycol (meth)acrylate, methylphenoxyethyl (meth)acrylate, dipropylene glycol (meth)acrylate, and ethylene oxide (EO)-modified or propylene oxide (PO)-modified products of these. One or, if needed, two or more of these other photopolymerizable compounds may be used. In particular, those with low odor and low skin irritation are preferred in terms of the safety. The term "(meth)acrylate" as used herein means acrylate and methacrylate.

The ink composition of the present invention preferably contains 50% by mass or more of a monofunctional monomer as the photopolymerizable compound. If the amount of the monofunctional monomer is less than 50% by mass, the adhesion of the ink composition to a polyvinyl chloride resin sheet is lowered. The amount of the monofunctional monomer is preferably 85% by mass at the maximum. If the amount is more than 85% by mass, the solvent resistance to, for example, isopropyl alcohol (IPA) may be lowered. The amount of the monofunctional monomer is more preferably 50 to 78% by mass.

The ink composition of the present invention contains a photopolymerization initiator.

The photopolymerization initiator is preferably a compound that exerts its function as an initiator when irradiated with light having a wavelength of 450 to 300 nm. The wording "exerts its function as an initiator when irradiated with light having a wavelength of 450 to 300 nm" means that the compound absorbs light in a wavelength range of 450 to 300 nm. The use of such a photopolymerization initiator can impart curability with light emitting diode (LED) light to the ink composition of the present invention.

In particular, the photopolymerization initiator contained is preferably an acylphosphine oxide photopolymerization initiator. The ink composition containing an acylphosphine oxide photopolymerization initiator as the photopolymerization initiator has favorable curability with light emitting diode (LED) light.

Specific examples of the acylphosphine oxide photopolymerization initiator include 2,4,6-trimethyl benzoyl-diphenyl-phosphine oxide (product name: TPO, produced by Lamberti S.p.A.).

The ink composition of the present invention may contain another photopolymerization initiator other than the acylphosphine oxide photopolymerization initiator. Specific examples of the other photopolymerization initiator include: triazine initiators (e.g., TAZ-204 (product name) produced by Midori Kagaku Co., Ltd.) such as 2,4,6-trichloro-s-triazine, 2-phenyl-4,6-bis(trichloromethyl)-s-triazine, 2-(p-methoxyphenyl)-4,6-bis(trichloromethyl)-s-triazine, 2-(p-tolyl)-4,6-bis(trichloromethyl)-s-triazine, 2-pipenyl-4,6-bis(trichloromethyl)-s-triazine, 2,4-bis(trichloromethyl)-6-styryl-s-triazine, 2-(naphth-1-yl)-4,6-bis(trichloromethyl)-s-triazine, 2-(4-methoxy-naphth-1-yl)-4,6-bis(trichloromethyl)-s-triazine, 2,4-trichloromethyl-(piperonyl)-6-triazine, and 2,4-trichloromethyl(4'-methoxystyryl)-6-triazine; and bis(2,4,6-trimethylbenzoyl)-phenylphosphine oxide (IRGACURE 819 (product name) produced by BASF JAPAN Ltd.). Each of these may be used alone, or two or more of these may be used in combination.

The ink composition of the present invention preferably contains 3 to 20% by mass of the photopolymerization initiator. If the amount of the photopolymerization initiator is less than 3% by mass, the curability with light emitting diode (LED) light may be insufficient. If the amount is more than 20% by mass, the effects given by the photopolymerization initiator are not any more enhanced, resulting in unfavorable excessive addition. The amount of the photopolymerization initiator is more preferably 3 to 15% by mass.

The ink composition of the present invention preferably contains a sensitizer (compound) that exerts its function when irradiated with light having a wavelength of 400 nm or more.

The wording "exerts its function when irradiated with light having a wavelength of 400 nm or more" means that the compound absorbs light in a wavelength range of 400 nm or more. The use of such a sensitizer enhances the curability of the ink composition of the present invention with light emitting diode (LED) light.

Examples of the sensitizer include: anthracene derivatives such as 9,10-dibutoxy anthracene, 9,10-diethoxy anthracene, 9,10-dipropoxy anthracene, and 9,10-bis(2-ethylhexyloxy)anthracene; and thioxanthone sensitizers such as 2,4-diethylthioxanthone, 2-isopropylthioxanthone, and 4-isopropylthioxanthone. Exemplary commercial products thereof include DBA and DEA (both produced by KAWASAKI KASEI CHEMICALS.) as anthracene derivatives and DETX and ITX (both produced by LAMBSON) as thioxanthone sensitizers.

The amount of such a sensitizer is preferably 0.5 to 3% by mass in the ink composition of the present invention. If the amount of the sensitizer is less than 0.5% by mass, the curability with light emitting diode (LED) light may be insufficient. If the amount is more than 3% by mass, the effect is not any more enhanced, resulting in unfavorable excessive addition.

When a thioxanthone photopolymerization initiator is used as a sensitizer, the photopolymerizable compound tends to be yellowed. As a result, the hue of the ink composition becomes more yellowish than the color derived from the pigment (i.e., original hue). Moreover, when N-vinyl caprolactam is used as the photopolymerizable compound, the ink composition is once yellowed and the yellowness is reduced with time because the ink composition tends to be discolored with time.

For preventing such a phenomenon, ink compositions which tend to be affected by such a change in color tone, including a magenta ink composition, a cyan ink composition, a white ink composition, and a clear ink composition each contain the acylphosphine oxide photopolymerization initiator and do not contain the thioxanthone photopolymerization initiator as a photopolymerization initiator.

The ink composition of the present invention can further contain a known photopolymerization initiator and a known sensitizer other than the photopolymerization initiator and the sensitizer.

The ink composition of the present invention contains a pigment.

The pigment may be an organic pigment or an inorganic pigment.

Specific examples of the organic pigment include dye lake pigments, azo pigments, benzimidazolone pigments, phthalocyanine pigments, quinacridone pigments, anthraquinone pigments, dioxazine pigments, indigo pigments, thioindigo pigments, perylene pigments, perinone pigments, diketopyrrolopirrole pigments, iso-indolinone pigments, nitro pigments, nitroso pigments, anthraquinone pigments, flavanthrone pigments, quinophthalone pigments, pyranthrone pigments, and indanthrone pigments.

Examples of the inorganic pigment include carbon black, titanium oxide, colcothar, graphite, iron black, chrome oxide green, and aluminum hydroxide.

The ink composition of the present invention preferably contains 1 to 20% by mass of the inorganic pigment. If the amount of the inorganic pigment is less than 1% by mass, the image quality of an obtainable printed material tends to be lowered. If the amount is more than 20% by mass, the viscosity characteristics of the ink composition of the present invention may be adversely affected.

The ink composition of the present invention may optionally contain a pigment dispersant.

The pigment dispersant is used for improving the dispersibility of the pigment and the storage stability of the ink composition of the present invention, and a conventionally used one may be nonlimitatively used. In particular, a polymer dispersant is preferably used. Examples of the pigment dispersant include carbodiimide dispersants, polyester amine dispersants, fatty acid amine dispersants, modified polyacrylate dispersants, modified polyurethane dispersants, multi-chain nonionic polymer dispersants, and polymeric ion activators. Each of these pigment dispersants may be used alone, or two or more of these may be used in admixture.

The ink composition preferably contains 1 to 200 parts by mass of the pigment dispersant based on 100 parts by mass of all the pigments used. If the amount of the pigment dispersant is less than 1 part by mass, the pigment dispersibility and the storage stability of the ink composition of the present invention may be lowered. It is possible to use more than 200 parts by mass of the pigment dispersant, but the effect given by the dispersant may not change. The amount of the pigment dispersant is more preferably 5 parts by mass at the minimum and 60 parts by mass at the maximum.

The ink composition of the present invention may contain various additives in order to exhibit various functions according to need. Specific examples of the additives include photostabilizers, surface treatment agents, surfactants, viscosity reducers, antioxidants, age resistors, crosslinking promoters, polymerization inhibitors, plasticizers, preservatives, pH adjusters, defoamers, and moisturizers.

The ink composition of the present invention containing the above constituent materials preferably has a flash point of 70°C or higher. The flash point is measured with a SETA closed-cup flash point tester in conformity with JIS K2265. The ink composition of the present invention having such a flash point is categorized as a flammable liquid, Hazard Category 4 of GHS. Specifically, the ink composition has low flammability and is excellent in safety.

The ink composition of the present invention has a viscosity of 12 mPa·s or less at 25°C. The ink composition of the present invention having such a viscosity has favorable ejection stability from an inkjet head compatible with energy saving and high speed/high definition printing at ambient temperature. The viscosity is preferably 5 mPa·s or less.

The viscosity as used herein means the viscosity measured with an E-type viscometer (product name: RE100L viscometer, produced by TOKI SANGYO CO., LTD) under the conditions of 25°C and 50 rpm.

The ink composition of the present invention has excellent ejection stability from an inkjet head compatible with energy saving and high speed/high definition printing at ambient temperature. Further containing a specific amount of a predetermined photopolymerizable compound described above in addition to the photopolymerization initiator and the sensitizer, the ink composition of the present invention is excellent in curability with light emitting diode (LED) light, has favorable adhesion to a polyvinyl chloride sheet such as tarpaulin or vinyl chloride resin sheets, inhibits cockling, and is excellent in all the safety properties such as a high flash point, low skin irritation, and low odor.

The method of preparing the ink composition of the present invention is not particularly limited. For example, the ink composition can be prepared by adding all the materials described above and mixing them with a bead mill or triple roll mill. The ink composition may also be prepared by mixing a pigment, a pigment dispersant, and a photopolymerizable compound to give concentrated base ink and adding components such as a photopolymerizable compound, a photopolymerization initiator, and a sensitizer to the concentrated base ink so that the ink has desired formulation.

A base material on which the ink composition of the present invention is printed is preferably a polyvinyl chloride sheet such as tarpaulin and vinyl chloride resin sheets. It is to be noted that printing with the ink composition of the present invention can be readily made on base materials (e.g., paper, plastic films, capsules, gels, metal foil, glass, wood materials, and fabric) conventionally used for printing with an ink composition for UV inkjet printing.

In an exemplary method for printing the ink composition of the present invention, specifically, the ink composition of the present invention is ejected from a low viscosity compatible inkjet head onto a base material, and a coating film of the ink composition on the base material is exposed to light to be cured.

In the ejection (image printing) onto a base material, the ink composition of the present invention is supplied to a low viscosity compatible printer head of an inkjet recording printer, and the ink composition is ejected from the low viscosity compatible printer head onto a base material in such a manner that the coating film has a thickness of, for example, 1 to 30 µm. In the exposure to light and curing (image curing), the coating film of the ink composition of the present invention applied onto a base material as an image is irradiated with light.

The inkjet recording printer used for printing the ink composition of the present invention may be a conventionally used inkjet recording printer. When a continuous-type inkjet recording printer is used, a conductivity imparting agent is further added to the ink composition of the present invention to adjust the electroconductivity.

Examples of the light source used in curing of the coating film include ultraviolet light, electron beam, visible light, and light emitting diode (LED). Containing vinyloxyethoxy ethyl acrylate and benzyl acrylate each in an above-mentioned predetermined amount as the photopolymerizable compound and an acylphosphine oxide photopolymerization initiator as the photopolymerization initiator, the ink composition of the present invention can exhibit excellent curability even in a case where an LED is used as a light source. Moreover, the use of an LED does not cause generation of ozone and enables curing of the coating film with low energy. LED light is preferably an active energy ray having a wavelength peak within a range of 420 to 365 nm. A printed material thus obtained is also encompassed by the present invention.

In other words, the printed material of the present invention is obtainable by photo-curing a coating film of the ink composition of the present invention applied onto a polyvinyl chloride sheet.

The printed material of the present invention has a thickness of preferably 1 to 20 µm. If the thickness is less than 1 µm, the printed material is likely to be affected by oxygen inhibition. If the thickness is more than 20 µm, internal curing tends to be insufficient.

### - Advantageous Effects of Invention

The present invention can provide a photocurable ink composition for inkjet printing having favorable ejection stability from a low viscosity compatible inkjet head at ambient temperature, and a printed material.

### DESCRIPTION OF EMBODIMENTS

The present invention is more specifically described in the following with reference to, but not limited to, examples. Unless otherwise specified, "%" and "parts" mean "% by mass" and "parts by mass", respectively.

Materials used in examples and comparative example are listed below.

### <Pigment dispersant>

AJISPER (®) PB821 (produced by Ajinomoto Fine-Techno Co., Inc.)
Solsperse 56000 (produced by The Lubrizol Corporation)

### <Photopolymerizable compound>

VEEA: vinyloxyethoxy ethyl acrylate (produced by NIPPON SHOKUBAI CO., LTD.)
V#160: benzyl acrylate (produced by OSAKA ORGANIC CHEMICAL INDUSTRY LTD.)
V-CAP: N-vinyl caprolactam (produced by ISP (Japan) Ltd.)
IBXA: isobornyl acrylate (produced by OSAKA ORGANIC CHEMICAL INDUSTRY LTD.)

### <Photopolymerization initiator>

TPO: 2,4,6-trimethylbenzoyl diphenyl phosphine oxide (produced by LAMBERTI)
DETX: 2,4-diethyl thioxanthone (produced by Lambson)

### <Surfactant>

BYK-315 (polyester-modified methylalkylpolysiloxane, produced by BYK Chemie)
BYK-310 (polyester-modified polydimethyl siloxane, produced by BYK Chemie)
BYK-306 (polyether-modified polydimethyl siloxane, produced by BYK Chemie)

### <Examples 1 to 10 and Comparative Examples 1 to 10>

### <Preparation of photocurable ink for inkjet printing>

### <Black ink composition>

A mixture containing a pigment (Pigment black 7), a pigment dispersant (AJISPER PB821), and a photopolymerizable compound (IBXA) at a ratio (by mass) of 20/8/72 was treated with an Eiger-mill (using zirconia beads having a diameter of 0.5 mm as a medium) for dispersion of the pigment, thereby preparing a conc. base.

The resulting conc. base was blended with components in accordance with the formulations (% by mass) in Table 1 to give black ink compositions of Examples 1 to 5 and Comparative Examples 1 to 5.

### <Yellow ink composition>

A mixture containing a pigment (Pigment yellow 150), a pigment dispersant (Solsperse 56000, produced by The Lubrizol Corporation), and a photopolymerizable compound (IBXA) at a ratio (by mass) of 16/6.4/77.6 was treated with an Eiger-mill (using zirconia beads having a diameter of 0.5 mm as a medium) for dispersion of the pigment, thereby preparing a conc. base.

The resulting conc. base was blended with components in accordance with the formulations (% by mass) in Table 1 to give yellow ink compositions of Example 6 and Comparative Example 6.

### <Cyan ink composition>

A mixture containing a pigment (Pigment blue 15:4), a pigment dispersant (Solsperse 56000, produced by The Lubrizol Corporation), and a photopolymerizable compound (IBXA) at a ratio (by mass) of 20/8/72 was treated with an Eiger-mill (using zirconia beads having a diameter f 0.5 mm as a medium) for dispersion of the pigment, thereby preparing a conc. base.

The resulting conc. base was blended with components in accordance with the formulations (% by mass) in Table 1 to give cyan ink compositions of Example 7 and Comparative Example 7.

### <Magenta ink composition >

A mixture containing a pigment (Pigment red 122), a pigment dispersant (Solsperse 56000, produced by The Lubrizol Corporation), and a photopolymerizable compound (IBXA) at a ratio (by mass) of 16/9.6/74.4 was treated with an Eiger-mill (using zirconia beads having a diameter of 0.5 mm as a medium) for dispersion of the pigment, thereby preparing a conc. base.

The resulting conc. base was blended with components in accordance with the formulations (% by mass) in Table 1 to give magenta ink compositions of Example 8 and Comparative Example 8.

### <White ink composition >

A mixture containing titanium oxide, a pigment dispersant (AJISPER PB821), and a photopolymerizable compound (IBXA) at a ratio (by mass) of 40/4/56 was treated with an Apex mill (using zirconia beads having a diameter of 0.5 mm as a medium), thereby preparing a conc. base.

The resulting conc. base was blended with components in accordance with the formulations (% by mass) in Table 1 to give white ink compositions of Examples 9 and Comparative Example 9.

### <Clear ink composition>

Components were blended in accordance with the formulations (% by mass) in Table 1 to give clear ink compositions of Example 10 and Comparative Example 10.

**[Table 1]**

| Formulation | Ex | | | | | ample | | | | |
|---|---|---|---|---|---|---|---|---|---|---|
| | Black | | | | | Yellow | Cyan | Magenta | White | Clear |
| | 1 | 2 | 3 | 4 | 5 | 6 | 7 | 8 | 9 | 10 |
| Black conc. base | 8 | 8 | 8 | 8 | 8 | - | - | - | - | - |
| Yellow conc. base | - | - | - | - | - | 15 | - | - | - | - |
| Cyan conc. base | - | - | - | - | - | - | 8 | - | - | - |
| Magenta conc.base | - | - | - | - | - | - | - | 15 | - | - |
| White conc. base | - | - | - | - | - | - | - | - | 32 | - |
| V-CAP | 15.5 | 15.5 | 15.5 | 15.5 | 15.5 | 15.5 | 15.5 | 15.5 | - | 14.5 |
| Benzyl acrylate | 45.45 | 45 | 44.5 | 53 | 25 | 42 | 49 | 42 | 40.5 | 47 |
| Vinvloxvethoxv ethylacrylate | 20 | 20 | 20 | 12 | 40 | 20 | 20 | 20 | 20 | 20 |
| Isobornyl acrylate | - | - | - | - | - | - | - | - | - | 10 |
| TPO | 7 | 7 | 7 | 7 | 7 | 7 | 7 | 7 | 7 | 8 |
| DETX | 4 | 4 | 4 | 4 | 4 | - | - | - | - | - |
| BYK315 (solid content of 25%) | 0.05 | 0.5 | 1 | 0.5 | 0.5 | 0.5 | 0.5 | 0.5 | 0.5 | 0.5 |
| BYK310 (polyester-modified polydimethyl siloxane, solid content of 25%) | - | - | - | - | - | - | - | - | - | - |
| BYK306 (polyether-modified polydimethyl siloxane, solid content of 12.5%) | - | - | - | - | - | - | - | - | - | - |
| Total | 100 | 100 | 100 | 100 | 100 | 100 | 100 | 100 | 100 | 100 |
| | | | | | | | | | | |

| Formulation | Comparative Example | | | | | | | | | |
|---|---|---|---|---|---|---|---|---|---|---|
| | Black | | | | | Yellow | Cyan | Magenta | White | Clear |
| | 1 | 2 | 3 | 4 | 5 | 6 | 7 | 8 | 9 | 10 |
| Black conc. base | 8 | 8 | 8 | 8 | 8 | - | - | - | - | - |
| Yellow conc. base | - | - | - | - | - | 15 | - | - | - | - |
| Cyan conc. base | - | - | - | - | - | - | 8 | - | - | - |
| Magenta conc. base | - | - | - | - | - | - | - | 15 | - | - |
| White conc. base | - | - | - | - | - | - | - | - | 32 | - |
| V-CAP | 15.5 | 15.5 | 15.5 | 15.5 | 15.5 | 15.5 | 15.5 | 15.5 | - | 14.5 |
| Benzyl acrylate | 45.49 | 44 | 45.45 | 45.4 | 15 | 42.45 | 49.45 | 42.45 | 40.95 | 47.45 |
| Vinyloxyethoxy ethylacrylate | 20 | 20 | 20 | 20 | 20 | 20 | 20 | 20 | 20 | 20 |
| Isobornyl acrylate | - | - | - | - | 22 | - | - | - | - | 10 |
| TPO | 7 | 7 | 7 | 7 | 15 | 7 | 7 | 7 | 7 | 8 |
| DETX | 4 | 4 | 4 | 4 | 4 | - | - | - | - | - |
| BYK315 (solid content of 25%) | 0.01 | 1.5 | - | - | 0.5 | - | - | - | - | - |
| BYK310 (polyester-modified polydimethyl siloxane, solid content of 25%) | - | - | 0.05 | - | - | 0.05 | 0.05 | 0.05 | 0.05 | 0.05 |
| BYK306 (polyether-modified polydimethyl siloxane, solid content of 12.5%) | - | - | - | 0.1 | - | - | - | - | - | - |
| Total | 100 | 100 | 100 | 100 | 100 | 100 | 100 | 100 | 100 | 100 |

### [Measurement of viscosity of ink composition]

The ink compositions of Examples 1 to 10 and Comparative Examples 1 to 10 were each measured for the viscosity with an E-type viscometer (product name: RE100L-type viscometer, produced by TOKI SANGYO CO.,LTD.) under the conditions of a temperature of 25°C and 50 rpm. Table 2 shows the results.

### [Measurement of surface tension of ink composition]

The ink compositions of Examples 1 to 10 and Comparative Examples 1 to 10 were each measured for the surface tension with a dynamic wettability tester (product name: WET-6000) produced by Rhesca Corporation at a temperature of 25°C. Table 2 shows the results.

### [Measurement of flash point of ink composition]

The ink compositions of Examples 1 to 10 and Comparative Examples 1 to 10 were each measured for the flash point with a SETA closed-cup flash point tester by a method in conformity with JIS K2265, while the temperature was kept at a constant temperature with an aluminum block. Table 2 shows the results.

### [Performance evaluation of ink composition]

The ink compositions of Examples 1 to 10 and Comparative Examples 1 to 10 were each applied to a polyvinyl chloride sheet (Flontlit Glossy 120g, produced by Cooley) with a #4 bar coater to form a coating film having a thickness of about 8 µm. Next, the formed coating films were cured using an LED lamp produced by Phoseon Technology. The curability, adhesion, solvent resistance, and inhibition of cockling when an LED lamp was used were evaluated by the following method. Table 2 shows the results.

### (Curability when LED lamp was used)

The curability was evaluated based on the accumulated amount (30 mJ/cm²) of irradiation energy required until the tackiness of the coating film surface was no longer observed, using an LED lamp produced by Phoseon Technology under the conditions of a distance between the lamp and the coating film of 2 cm and a time for each irradiation of 1 second (accumulated amount of UV light of 40 mJ/cm² per second).

### (Adhesion)

Each ink composition was cured until the tackiness was no longer observed on the coating film surface, and the resulting cured coating film was cross-cut with a cutter knife. A Cellophane tape was stuck to the cut portion and then removed therefrom. The degree of peeling of the cured coating film was evaluated based on the following criteria.
Good: No peeling of cured coating film was observed.
Fair: Peeling of cured coating film was observed and peeled area was less than 20%.
Poor: Peeled area of cured coating film was 20% or more.

### (Solvent resistance)

The cured coating film of each ink composition was rubbed 10 times at a 500 g load with a bleached cloth soaked with isopropyl alcohol (IPA) using a Gakushin-type rubbing tester (produced by DAIEI KAGAKU SEIKI MFG.co., ltd.), and the degree of peeling of the cured coating film was checked by observing contamination of the bleached cloth and the surface state of the cured coating film after rubbing and evaluated based on the following criteria.
Good: Bleached cloth was not contaminated and cured coating film was not worn.
Fair: Bleached cloth was contaminated but cured coating film was not worn.
Poor: Bleached cloth was contaminated and cured coating film was worn.

### (Inhibition of cockling)

Each ink composition was applied to a polyvinyl chloride sheet (Flontlit Glossy 120g, produced by Cooley) with a #12 bar coater to form a coating film having a thickness of about 24 µm. The coating film was irradiated with UV light to give a printed material (cured coating film). For evaluating whether or not cockling is inhibited, the presence of a deflection on the backside of the printed material was evaluated based on the following criteria.
Good: Deflection was not observed in coated portion in comparison with uncoated portion
Poor: Deflection was observed in coated portion in comparison with uncoated portion

### (Ejection stability of ink composition)

Under an atmosphere temperature of 25°C, an inkjet recorder equipped with an inkjet nozzle for low-viscosity ink and the ink compositions of Examples 1 to 10 and Comparative Examples 1 to 10 were allowed to stand for 24 hours to set the temperatures of the inkjet recorder and the compositions to 25°C. Then, under an atmosphere temperature of 25°C, each ink composition was printed on a polyvinyl chloride sheet (FlontlitGlossy120g, produced by Cooley) continuously. The ejecting stability was evaluated based on the following criteria.
Good: Printing irregularity was not found and ink composition was stably ejected.
Poor: Printing irregularity was found or ink composition was not stably ejected.

### (Hazard information)

Toxicity of each of the ink compositions of the examples and the comparative examples was assessed based on Globally Harmonized System of Classification and Labelling of Chemicals (GHS). Table 2 shows the results.

**[Table 2]**

| Evaluation items | Example | | | | | | | | | |
|---|---|---|---|---|---|---|---|---|---|---|
| | 1 | 2 | 3 | 4 | 5 | 6 | 7 | 8 | 9 | 10 |
| Viscosity (mPa·s, 25°C) | 4.5 | 4.5 | 4.6 | 4.5 | 4.5 | 4.8 | 4.4 | 4.8 | 4.9 | 4.0 |
| Flash point (°C) | 93 or higher | 93 or higher | 93 or higher | 93 or higher | 93 or higher | 93 or higher | 93 or higher | 93 or higher | 93 or higher | 93 or higher |
| Surface tension Surface tension | 30.6 | 30.5 | 30.4 | 30.5 | 30.5 | 30.6 | 30.5 | 30.4 | 30.5 | 30.3 |
| Curability with LED mJ/cm² (number of times of irradiation) | 30 (once) | 30 (once) | 30 (once) | 30 (once) | 30 (once) | 30 (once) | 30 (once) | 30 (once) | 30 (once) | 30 (once) |
| Adhesion | Good | Good | Good | Good | Good | Good | Good | Good | Good | Good |
| Solvent resistance | Good | Good | Good | Good | Good | Good | Good | Good | Good | Good |
| Inhibition of cockling | Good | Good | Good | Good | Good | Good | Good | Good | Good | Good |
| Election stability | Good | Good | Good | Good | Good | Good | Good | Good | Good | Good |
| GHS hazard information | No acute toxicity | No acute toxicity | No acute toxicity | No acute toxicity | No acute toxicity | No acute toxicity | No acute toxicity | No acute toxicity | No acute toxicity | No acute toxicity |
| | | | | | | | | | | |

| Evaluation items | Comparative Example | | | | | | | | | |
|---|---|---|---|---|---|---|---|---|---|---|
| | 1 | 2 | 3 | 4 | 5 | 6 | 7 | 8 | 9 | 10 |
| Viscosity (mPa·s, 25°C) | 4.4 | 4.6 | 4.5 | 4.5 | 13 | 4.4 | 4.8 | 4.9 | 4.0 | 3.8 |
| Flash point (°C) | 93 or higher | 93 or higher | 93 or higher | 93 or higher | 93 or higher | 93 or higher | 93 or higher | 93 or higher | 93 or higher | 93 or higher |
| Surface tension | 34 | 30.3 | 25.9 | 26.1 | 30.3 | 25.8 | 26 | 25.9 | 25.8 | 25.6 |
| Curability with LED mJ/cm² (number of times of irradiation) | 30 (once) | 30 (once) | 30 (once) | 30 (once) | 30 (once) | 30 (once) | 30 (once) | 30 (once) | 30 (once) | 30 (once) |
| Adhesion | Good | Good | Good | Good | Good | Good | Good | Good | Good | Good |
| Solvent resistance | Good | Good | Good | Good | Good | Good | Good | Good | Good | Good |
| Inhibition of cockling | Good | Good | Good | Good | Good | Good | Good | Good | Good | Good |
| Ejection stability | Poor | Poor | Poor | Poor | Poor | Poor | Poor | Poor | Poor | Poor |
| GHS hazard information | No acute toxicity | No acute toxicity | No acute toxicity | No acute toxicity | No acute toxicity | No acute toxicity | Acutely toxic | No acute toxicity | No acute toxicity | No acute toxicity |

As shown in Table 2, each of the ink compositions of the examples was highly evaluated in all respects.

In contrast, the black ink compositions of Comparative Example 1 and Comparative Example 2 each had poor ejection stability because the black ink composition of Comparative Example 1 contained only a too small amount of polyester-modified methylalkylpolysiloxane as a surfactant and the black ink composition of Comparative Example 2 contained a too large amount of polyester-modified methylalkylpolysiloxane as a surfactant.

The black ink compositions of Comparative Examples 3 and 4, the yellow ink composition of Comparative Example 6, the cyan ink composition of Comparative Example 7, the magenta ink composition of Comparative Example 8, the white ink composition of Comparative Example 9, and the clear ink composition of Comparative Example 10, which did not contain polyester-modified methylalkylpolysiloxane as a surfactant, had poor ejection stability.

The highly viscous black ink composition of Comparative Example 5 had poor ejection stability.

### - Industrial Applicability

The photocurable ink composition for inkjet printing of the present invention having the above formulation has favorable ejection stability from a low viscosity compatible inkjet head at ambient temperature.

## Claims

1. A photocurable ink composition for inkjet printing comprising at least a photopolymerizable compound, a photopolymerization initiator, a surfactant, and a pigment,
the photocurable ink composition for inkjet printing having a viscosity at 25°C of 12 mPa·s or less,
the photocurable ink composition for inkjet printing containing, as the surfactant, 0.01 to 0.30% by mass of polyester-modified methylalkylpolysiloxane.

2. The photocurable ink composition for inkjet printing according to claim 1, the photocurable ink composition for inkjet printing containing
4 to 70% by mass of vinyloxyethoxy ethyl acrylate as the photopolymerizable compound.

3. The photocurable ink composition for inkjet printing according to claim 1 or 2, the photocurable ink composition for inkjet printing containing
10 to 65 % by mass of benzyl acrylate as the photopolymerizable compound and
an acylphosphine oxide photopolymerization initiator as the photopolymerization initiator.

4. The photocurable ink composition for inkjet printing according to claim 1, 2, or 3,
the photocurable ink composition for inkjet printing having a flash point of 70°C or higher and a viscosity at 25°C of 5 mPa·s or less, the flash point being measured with a SETA closed-cup flash point tester in conformity with JIS K2265.

5. A printed material obtainable by photocuring a coating film of the photocurable ink composition for inkjet printing according to claim 1, 2, 3, or 4 printed on a polyvinyl chloride sheet.
